# EUROPEAN PATENT APPLICATION

(11) **EP 4 084 138 A1**
(43) Date of publication of application: **02.11.2022**
(21) Application number: 20909824.3
(22) Date of filing: 02.01.2020
(51) Int. Cl.: H01M 4/36

(54) **NEGATIVE ELECTRODE, ELECTROCHEMICAL APPARATUS CONTAINING SAME, AND ELECTRONIC DEVICE**

(71) Applicant: Ningde Amperex Technology Limited, Ningde, Fujian 352100 (CN)
(72) Inventor: WANG, Chao, Ningde, Fujian 352100 (CN); LIAO, Qunchao, Ningde, Fujian 352100 (CN); CUI, Hang, Ningde, Fujian 352100 (CN); XIE, Yuansen, Ningde, Fujian 352100 (CN)
(74) Representative: Klunker IP Patentanwälte PartG mbB
(86) International application number: PCT/CN2020/070130
(87) International publication number: WO 2021/134755

(57) **Abstract**

This application relates to a negative electrode, an electrochemical device containing the negative electrode, and an electronic device. The negative electrode includes a negative current collector and a negative active material layer. The negative active material layer includes a silicon-based material. A weight ratio R of the silicon-based material to a total weight of the negative active material layer and an absolute strength σ of the negative current collector satisfy the following formula: K = σ/(1.4 × R + 0.1), where K is a relation coefficient, and the relation coefficient is greater than or equal to 4,000 N/m. The electrochemical device according to this application can effectively mitigate XY expansion and deformation of the negative active material layer by using the foregoing negative electrode, thereby enhancing cycle performance and safety performance of the electrochemical device.

## Description

### TECHNICAL FIELD

This application relates to the technical field of energy storage, and in particular, to a negative electrode, an electrochemical device containing the negative electrode, and an electronic device.

### BACKGROUND

With rapid development of mobile electronic technologies, people are using a mobile electronic device such as a mobile phone, a tablet computer, a notebook computer, and an unmanned aerial vehicle more often and people's experience requirements are increasingly higher. Therefore, an electrochemical device (such as a lithium-ion battery) that provides energy for the electronic device needs to provide a higher energy density, a higher C-rate, higher safety, and less fading of capacity that occurs after repeated charge and discharge processes.

In the field of electrochemical devices, the use of a material of a high energy density as a negative active material is one of the main research pursuits. However, materials of a high energy density (such as a silicon-based material) are generally not compatible with existing cell structures, for example, due to a too low conductivity, a too high expansion rate, insufficient processing performance. Therefore, currently, it is an urgent research topic to improve and optimize a cell structure (for example, a negative electrode, a separator, and a positive electrode) of the electrochemical device that uses a material of a high energy density as a negative active material.

### SUMMARY

This application provides a negative electrode, an electrochemical device containing the negative electrode, and an electronic device in an attempt to solve at least one problem in the related art to at least some extent.

According to an aspect of this application, this application provides a negative electrode. The negative electrode includes a negative current collector and a negative active material layer. The negative active material layer includes a silicon-based material. A weight ratio R of the silicon-based material to a total weight of the negative active material layer and an absolute strength σ of the negative current collector satisfy the following formula: K = σ/(1.4 × R + 0.1), where K is a relation coefficient, and the relation coefficient is greater than or equal to approximately 4,000 N/m.

By defining a relationship between the weight ratio of the silicon-based material and the absolute strength of the negative current collector, the negative electrode according to this application can effectively mitigate XY expansion and deformation of the negative active material layer during charge and discharge cycles, thereby reducing a cycle expansion rate of the electrochemical device and enhancing cycle performance and safety performance of the electrochemical device.

According to another aspect of this application, this application provides an electrochemical device, including a positive electrode, a separator, and the foregoing negative electrode.

According and another aspect of this application, this application provides an electronic device. The electronic device includes the electrochemical device.

Additional aspects and advantages of the embodiments of this application will be described or illustrated in part later herein or expounded through implementation of the embodiments of this application.

### DESCRIPTION OF DRAWINGS

For ease of describing the embodiments of this application, the following outlines the drawings necessary for describing the embodiments of this application or the prior art. Apparently, the drawings outlined below are only a part of embodiments in this application. Without making any creative efforts, a person skilled in the art can still obtain the drawings of other embodiments according to the structures illustrated in these drawings.
FIG. 1 shows a cycle capacity curve according to Embodiment 1 and Embodiment 6 of this application;
FIG. 2 shows a cycle expansion rate curve of a lithium-ion battery according to Embodiment 1 and Embodiment 6 of the application;
FIG. 3 shows an X-ray diffraction pattern according to Embodiment 16 of this application; and
FIG. 4 shows an X-ray diffraction pattern according to Embodiment 19 of this application.

### DESCRIPTION OF EMBODIMENTS

Embodiments of this application will be described in detail below. Throughout the specification of this application, the same or similar components and the components having the same or similar functions are denoted by similar reference numerals. The embodiments described herein with reference to the accompanying drawings are illustrative and graphical in nature, and are intended to enable a basic understanding of this application. The embodiments of this application shall not be construed as a limitation on this application.

The terms "roughly," "substantially," "substantively", and "approximately" used herein are intended to describe and represent small variations. When used with reference to an event or situation, the terms may represent an example in which the event or situation occurs exactly and an example in which the event or situation occurs very approximately. For example, when used together with a numerical value, the terms may represent a variation range falling within ±10% of the numerical value, such as ±5%, ±4%, ±3%, ±2%, ±1%, ±0.5%, ±0.1%, or ±0.05% of the numerical value. For example, if a difference between two numerical values falls within ±10% of an average of the numerical values (such as ±5%, ±4%, ±3%, ±2%, ±1%, ±0.5%, ±0.1%, or ±0.05% of the average), the two numerical values may be considered "substantially" the same.

In this specification, unless otherwise specified or defined, relativity terms such as "central", "longitudinal", "lateral", "front", "rear", "right" "," "left", "internal", "external", "lower", "higher", "horizontal", "perpendicular", "higher than", "lower than" , "above", "under", "top", "bottom", and derivative terms thereof (such as "horizontally", "downwardly", "upwardly") shall be interpreted as a direction described in the context or a direction illustrated in the drawings. The relativity terms are used for ease of description only, and do not require that the construction or operation of this application should be in a specific direction.

In addition, a quantity, a ratio, or another numerical value is sometimes expressed in a range format herein. Understandably, such a range format is for convenience and brevity, and shall be flexibly understood to include not only the numerical values explicitly specified and defined in the range, but also all individual numerical values or sub-ranges covered in the range as if each individual numerical value and each sub-range were explicitly specified.

In the description of embodiments and claims, a list of items referred to by using the terms such as "at least one of", "at least one thereof", "at least one type of" or other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

In the field of electrochemical devices, to pursue a higher energy density of an electrochemical device, one of the research pursuits is to substitute a negative active material that has a higher gram capacity. Silicon has a high theoretical gram capacity (4,200 mAh/g), and is very promising in application in lithium-ion batteries. Chinese Patent CN107925074A discloses a silicon-based material (SiOx, 0 ≤ x) crystal that is disproportionate to some extent, and the silicon-based material is used as a negative active material to effectively improve the first-time charge and discharge efficiency and cycle performance of a lithium-ion battery. A Chinese patent application with Chinese Patent Publication No. CN107925074A exemplarily gives a specific embodiment in which a silicon-based material serves as a negative active material, which is incorporated herein by reference in its entirety. However, during charge and discharge cycles, the volume of a silicon-based material expands greatly in a lithiation process. This further exerts a relatively large acting force on the negative current collector, and results in XY expansion and structural deformation of a negative electrode.

Chinese Patent CN103579578B discloses an idea of suppressing stretching of a negative electrode in a charging and discharging process by restricting a tensile strength and thickness of a copper foil current collector. However, the copper foil current collector with a high tensile strength leads to a too thick copper foil and a too rigid structure of the negative electrode, thereby decreasing an energy density of a lithium-ion battery and deteriorating processing performance.

A Chinese patent application with Chinese Patent Publication No. CN107925074A exemplarily gives a specific embodiment in which a silicon-based material serves as a negative active material, which is incorporated herein by reference in its entirety. A Chinese patent application with Chinese Patent Publication No. CN103579578B exemplarily gives a specific embodiment of copper foil current collectors that have different tensile strengths, which is incorporated herein by reference in its entirety.

In this specification, the term "XY expansion" means volume expansion of a negative active material layer in a horizontal direction of the negative current collector.

By defining a relationship between a content of a silicon-based material in a negative electrode and an absolute strength of a negative current collector, this application causes a strength of the negative current collector to be greater than a stress strength generated by expansion of the silicon-based material, and enhances a tolerance of the negative current collector to volume expansion of the negative electrode.

According to an aspect of this application, this application provides a negative electrode. The negative electrode includes a negative current collector and a negative active material layer. The negative active material layer includes a silicon-based material. A weight ratio R of the silicon-based material to a total weight of the negative active material layer and an absolute strength σ of the negative current collector satisfy the following formula: K = σ/(1.4 × R + 0.1), where K is a relation coefficient, and the relation coefficient is greater than or equal to approximately 4,000 N/m. In other embodiments, the relation coefficient is approximately 4,000 N/m. In other embodiments, roughly the relation coefficient is, for example, approximately 4,500 N/m, approximately 5,000 N/m, approximately 5,500 N/m, approximately 6,000 N/m, approximately 6,500 N/m, approximately 7,000 N/m, or a range formed by any two of such values. The negative electrode according to this application can effectively suppress XY expansion of the negative active material layer, reduce structural deformation of the negative electrode, and increase a cycle life of the electrochemical device containing the negative electrode.

In this specification, the term "absolute strength" is also referred to as "ultimate strength" or "breaking stress", and represents a highest stress that an object can withstand without being deformed, stretched or fractured under an external force.

In some embodiments, the absolute strength of the negative current collector is greater than or equal to approximately 500 N/m. In other embodiments, roughly the absolute strength of the negative current collector is, for example, approximately 500 N/m, approximately 600 N/m, approximately 700 N/m, approximately 1,000 N/m, approximately 1,500 N/m, approximately 2,000 N/m, approximately 2,600 N/m, or a range formed by any two of such values. In other embodiments, the absolute strength of the negative current collector is approximately 1,000 N/m to approximately 2,600 N/m.

In some embodiments, a thickness of the negative current collector is approximately 1 µm to approximately 15 µm. In other embodiments, roughly the thickness of the negative current collector is, for example, approximately 1 µm, approximately 2 µm, approximately 3 µm, approximately 5 µm, approximately 10 µm, approximately 12 µm, approximately 15 µm, or a range formed by any two of such values. In other embodiments, the thickness of the negative current collector is approximately 3 µm to approximately 10 µm.

In some embodiments, the negative current collector includes at least one of a copper foil, a nickel foil, a titanium foil, a chromium foil, and a stainless steel foil. Understandably, without departing from the spirit of this application, a person skilled in the art may select any conventional conductive foil as the negative current collector according to specific requirements without limitation.

In some embodiments, the silicon-based material includes, but is not limited to, one or more of simple-substance silicon, a silicon oxide material, silicon carbon, and a silicon alloy. In some embodiments, the silicon-based material includes one or more silicon oxide materials whose component is represented by a general formula M_{y}SiOₓ, where 0 ≤ y ≤4, 0 ≤ x ≤4, and M includes at least one of Li, Mg, Ti, and Al.

In an XRD diffraction pattern of the silicon oxide material obtained in an X-ray diffraction test (X-ray diffraction, XRD), a ratio 12/11 of a second peak intensity 12 attributed to a range of 28.0°~29.0° to a first peak intensity I1 attributed to a range of 20.5°~21.5° can reflect the extent of impact caused by disproportionation onto the silicon oxide material. A higher ratio 12/11 of the second peak intensity 12 to the first peak intensity I1 means a larger size of nano-silicon crystal grains generated by the SiO disproportionation occurring inside the silicon oxide material. In some embodiments, the ratio 12/11 of the second peak intensity I2 to the first peak intensity I1 of the silicon oxide material is greater than 0 and less than or equal to 10. In other embodiments, the ratio 12/11 of the second peak intensity 12 to the first peak intensity I1 of the silicon oxide material is less than or equal to 1.

In some embodiments, the negative active material layer further includes, but is not limited to, a carbon-based material, a metal compound, a sulfide, a lithium nitride (such as LiN3), lithium metal, a metal combined with lithium to form an alloy, and a polymer material, and other negative active materials capable of absorbing and releasing lithium. Examples of the carbon-based material may include low-graphitization carbon, carbon prone to graphitization, artificial graphite, natural graphite, mesophase carbon microspheres, soft carbon, hard carbon, pyrolysis carbon, coke, glassy carbon, an organic polymer compound sintered body, carbon fiber, and activated carbon. In some embodiments, the negative active material layer further includes a carbon-based material.

In some embodiments, a weight ratio of the silicon-based material to a total weight of the negative active material layer is approximately 1% to approximately 70%. In other embodiments, roughly the weight ratio of the silicon-based material is, for example, approximately 1%, approximately 5%, approximately 10%, approximately 20%, approximately 30%, approximately 40%, approximately 50%, approximately 60%, approximately 70%, or a range formed by any two of such values. In some embodiments, the weight ratio of the silicon-based material to the total weight of the negative active material layer is approximately 10% to approximately 40%.

In some embodiments, the negative active material layer further includes a binder and a conductive agent. The binder includes at least one of polyacrylic acid, sodium polyacrylic acid, potassium polyacrylic acid, lithium polyacrylic acid, polyimide, polyvinyl alcohol, carboxymethyl cellulose, sodium carboxymethyl cellulose, polyamide imide, styrene butadiene rubber, and polyvinylidene fluoride. The conductive agent includes at least one of conductive carbon black, carbon nanotubes, carbon fiber, and Ketjen black.

Understandably, a person skilled in the art may select any conventional binder or conductive agent according actual requirements without limitation.

In some embodiments, the silicon-based material in the negative active material layer further includes a coating. By coating the silicon-based material with a carbon material or a polymer material, the coating can restrain expansion of the silicon-based material during lithiation, and serve as a buffer layer against volume changes to enhance structural stability of the negative electrode. In addition, the coating can effectively avoid direct contact between the silicon-based material and an electrolytic solution in a lithiation process, thereby stabilizing formation of a solid electrolyte interface (solid electrolyte interface, SEI) film on the surface of the negative electrode, reducing irreversible capacity loss, and improving the cycle performance of the lithium-ion battery. In addition, the highly conductive coating can effectively improve surface conductivity of the silicon-based material, enhance electronic conductivity and ionic conductivity of the negative electrode material, and enhance the rate performance of the lithium-ion battery.

In some embodiments, the coating includes at least one of a carbon material and a polymer material; and the carbon material includes at least one of amorphous carbon, carbon nanotubes, carbon nanoparticles, vapor grown carbon fiber, and graphene. The polymer material includes at least one of polyvinylidene fluoride or a derivative thereof, carboxymethyl cellulose or a derivative thereof, sodium carboxymethyl cellulose or a derivative thereof, polyvinylpyrrolidone or a derivative thereof, polyacrylic acid or a derivative thereof, and polystyrene butadiene rubber.

In some embodiments, a thickness of the negative active material layer is approximately 50 µm to approximately 200 µm.

In some embodiments, a compacted density of the negative active material layer is approximately 1.4 g/cm³ to approximately 1.9 g/cm³.

In this context, the term "compacted density" is a weight of an active material on a unit area of the current collector divided by a total thickness of the cold-calendered active material layer on the surface of the current collector in a vertical direction.

In some embodiments, a porosity of the negative active material layer is approximately 15% to approximately 35%.

In some embodiments, the method for preparing a negative electrode in this application includes the following steps:

taking a specific amount of silicon-based material and graphite, mixing them with a binder and a conductive agent at a fixed weight ratio, and adding the mixture into deionized water and stirring the mixture homogeneously; sifting the stirred mixture to obtain a mixed slurry; coating the mixed slurry onto a copper foil current collector, and drying the current collector; and cold-calendering the dried current collector to obtain a negative active material layer, and then performing a cutting step to obtain a negative electrode.

Understandably, without departing from the spirit of this application, the steps in the method for preparing the negative electrode in the embodiments of this application may be selected according to specific requirements, or may replace other conventional processing methods in the art without limitation.

According to another aspect of this application, some embodiments of this application further provide an electrochemical device that includes the negative electrode according to this application. In some embodiments, the electrochemical device is a lithium-ion battery. The lithium-ion battery includes the negative electrode, the separator, and the positive electrode according to the foregoing embodiments. The separator is disposed between the positive electrode and the negative electrode.

In some embodiments, the positive electrode includes a positive current collector. The positive current collector may be an aluminum foil or a nickel foil. However, other positive current collectors and negative current collectors commonly used in the art may also be used without limitation.

In some embodiments, the positive electrode includes a positive active material capable of absorbing and releasing lithium (Li) (hereinafter sometimes referred to as "positive active material capable of absorbing/releasing lithium Li"). Examples of the positive active material capable of absorbing/releasing lithium (Li) may include one or more of lithium cobalt oxide, lithium nickel cobalt manganese oxide, lithium nickel cobalt aluminum oxide, lithium manganese oxide, lithium iron manganese phosphate, lithium vanadium phosphate, lithium vanadyl phosphate, lithium iron phosphate, lithium titanium oxide, and a lithium-rich manganese-based materials.

In the positive active material, the chemical formula of the lithium cobalt oxide may be Li_{y}CoₐM1_{b}O2_{-c}, where M1 is selected from at least one of nickel (Ni), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), yttrium (Y), lanthanum (La), zirconium (Zr), and silicon (Si), and values of y, a, b, and c are in the following ranges: 0.8 ≤ y ≤ 1.2, 0.8 ≤ a ≤ 1, 0 ≤ b ≤ 0.2, -0.1 ≤ c ≤ 0.2, respectively.

In the positive active material, the chemical formula of the lithium nickel cobalt manganese oxide or the lithium nickel cobalt aluminum oxide may be Li_{z}Ni_{d}M2ₑO_{2-f}, where M2 is selected from at least one of cobalt (Co), manganese (Mn), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), tungsten (W), zirconium (Zr), and silicon (Si), and values of z, d, e, and f are in the following ranges: 0.8 ≤ z ≤ 1.2, 0.3 ≤ d ≤ 0.98, 0.02 ≤ e ≤ 0.7, -0.1 ≤ f ≤ 0.2, respectively.

Among the positive active materials, the chemical formula of lithium manganese oxide is LiᵤMn_{2-g}M3_{g}O₄₋ₕ, where M3 is selected from at least one of cobalt (Co), nickel (Ni), magnesium (Mg), aluminum (Al), boron (B), titanium (Ti), vanadium (V), chromium (Cr), iron (Fe), copper (Cu), zinc (Zn), molybdenum (Mo), tin (Sn), calcium (Ca), strontium (Sr), and tungsten (W), and values of z, g, and h are in the following ranges: 0.8 ≤ u ≤ 1.2, 0 ≤ g <1.0, and -0.2 ≤ h ≤ 0.2, respectively.

In some embodiments, the positive electrode may further include at least one of a binder and a conductive agent. Understandably, a person skilled in the art may select a conventional binder and a conventional conductive agent according actual requirements without limitation.

In some embodiments, the separator includes, but is not limited to, at least one of polyethylene, polypropylene, polyethylene terephthalate, polyimide, and aramid. For example, the polyethylene includes a component selected from at least one of high-density polyethylene, low-density polyethylene, and ultra-high-molecular-weight polyethylene. Especially the polyethylene and the polypropylene are highly effective in preventing short circuits, and improve stability of the battery through a shutdown effect.

The lithium-ion battery according to this application further includes an electrolyte. The electrolyte may be one or more of a gel electrolyte, a solid-state electrolyte, and an electrolytic solution. The electrolytic solution includes a lithium salt and a nonaqueous solvent.

In some embodiments, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, the lithium salt is LiPF₆ because it provides a high ionic conductivity and improves cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and any combination thereof.

In some embodiments, the nonaqueous solvent is selected from groups that each include ethylene carbonate, propylene carbonate, diethyl carbonate, dimethyl carbonate, ethyl methyl carbonate, propylene carbonate, methyl acetate, ethyl propionate, fluoroethylene carbonate, and any combination thereof.

Understandably, the method for preparing the negative electrode, the positive electrode, the separator, and the lithium-ion battery in the embodiments of this application may be, but without limitation, any appropriate conventional method in the art according to specific requirements without departing from the spirit of this application. In an implementation of the method for manufacturing an electrochemical device, the method for preparing a lithium-ion battery includes: winding, folding, or stacking the negative electrode, the separator, the positive electrode in the foregoing embodiments sequentially into an electrode assembly; putting the electrode assembly into, for example, an aluminum laminated film, and injecting an electrolytic solution; and then performing steps such as vacuum packaging, static standing, formation, and reshaping to obtain a lithium-ion battery.

Although the lithium-ion battery is used as an example for description above, a person skilled in the art after reading this application can learn that the negative electrode in this application is applicable to other suitable electrochemical devices. Such electrochemical devices include any device in which an electrochemical reaction occurs. Specific examples of the devices include all kinds of primary batteries, secondary batteries, fuel batteries, solar batteries, or capacitors. In particular, the electrochemical apparatus is a lithium secondary battery, including a lithium metal secondary battery, a lithium-ion secondary battery, a lithium polymer secondary battery, or a lithium-ion polymer secondary battery.

Some embodiments of this application further provide an electronic device. The electronic device includes the electrochemical device in the embodiments of this application.

The electronic device configured to include the electrochemical device in the embodiments of this application may be any electronic device in the prior art without being specifically limited. In some embodiments, the electronic device may include, but without limitation, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

### Embodiments

The following enumerates some specific embodiments to better describe the technical solution of this application. In the embodiments, a weight per unit and a compacted density of a negative electrode are measured; a cycle performance test, a cycle expansion rate test, and a discharge rate test are performed on an electrochemical device (a lithium-ion b attery).

### I. Test methods

### Method for testing an absolute strength:

Performing measurement by using a tensile testing machine with a measurement range of 0 N to 1000 N and an indication error of ±1%, and a vernier caliper with a measurement range of 0 mm to 300 mm and a minimum graduation value of 0.02 mm or an measurement tool of a corresponding precision; cutting out a to-be-tested sample that is 200±0.5 mm in length and 15±0.25 mm in width; in a width direction of an to-be-tested object, taking 2 to-be-tested samples in a vertical direction and in a horizontal direction respectively; subsequently, putting the to-be-tested samples in the tensile testing machine, where collet chuck distance is 125±0.1 mm, a tensile speed of the chuck is 50 mm/min, and a test temperature is 20±10 °C; applying loads in a length direction of the to-be-tested sample continuously until the sample is snapped off; reading a value of a maximum load F on a dynamometer or a tensile curve, and calculating an absolute strength: σ=F/L, where L is the width of the to-be-tested sample. taking an arithmetic average of test results of 4 samples to obtain the absolute strength of the to-be-tested object.

### Laser particle size analysis:

The laser particle size test is to test a particle distribution based on a principle that particles of different sizes can cause a laser beam to scatter at different intensities. Main indicators indicative of particle characteristics include Dn10, Dv10, Dv50, Dv90, Dv99, and the like. Dv50 is called a particle size, and represents a particle size of the material at a cumulative volume of 50% in a volume-based particle size distribution as measured by starting from small particle sizes. In the embodiments of this application and comparative embodiments, a particle size of sample of particles are analyzed by using a Mastersizer 2000 laser particle size distribution analyzer. The test steps include: dispersing samples of the positive electrode material in 100 mL of dispersant (deionized water) so that a shading degree is 8~12%; then ultrasonically treating the samples at an ultrasonic intensity of 40 KHz and 180 W for 5 minutes; and analyzing the laser particle size distribution of the samples after the ultrasonic treatment, so as to obtain particle size distribution data.

### X-ray diffraction test:

Using an X-ray diffractometer (Bruker-D8) to carry out a test according to JJS K 0131-1996 *General Rules for X-Ray Diffractometry;* specifically, setting a test voltage to 40 kV, setting a current to 30 mA, setting a scanning angle range to 10°~85°, setting a scanning step length to 0.0167°, and setting the time of each step length to 0.24 s, so as to obtain an XRD diffraction pattern; and recording a highest intensity value 12 of 2θ attributed to a range of 28.0°~29.0°, and a highest intensity value I1 attributed to a range of 20.5°~21.5°, and calculating the 12/11 ratio value.

### Test of weight per unit and compacted density:

Along the surface of the negative current collector, taking a wafer that is 1540.25 mm² in area from the negative active material layer of the to-be-tested negative electrode, and using the wafer as a sample of the active material; recording the weight of the negative active material after removing the negative current collector; taking 12 samples of the active material from different positions for each group, and calculating the weight per unit area of the negative active material layer;

measuring a total thickness of the negative active material layer of the negative electrode in a vertical direction of the surface of the negative current collector (excluding the thickness of the current collector); and taking 12 samples of the active material layer from different positions for each group, and calculating a compacted density of the negative active material layer: compacted density = weight of the negative active material/total thickness in the vertical direction of the surface of the current collector.

### Cycle performance test:

Putting a lithium-ion battery in the following embodiments and comparative embodiments into a 25 °C±2 °C thermostat, leaving the battery to stand for 2 hours, charging the battery at a constant current of 0.7C until the voltage reaches 4.4 V, and then charging the battery at a constant voltage of 4.4 V until the current reaches 0.02C, and leaving the battery to stand for 15 minutes; discharging the battery at a constant current of 0.5C until the voltage reaches 3.0 V, thereby completing one charge and discharge cycle process; recording a discharge capacity of the lithium-ion battery in a first cycle under 25 °C±2 °C and 45 °C±2 °C; then performing charge and discharge cycles repeatedly according to the foregoing method, and recording a discharge capacity after each charge and discharge process; subsequently, comparing the discharge capacities with a discharge capacity after the first cycle to obtain a cycle capacity curve;
taking 4 lithium-ion batteries for each group, and calculating an average value of a capacity retention rate of the lithium-ion batteries:
cycle capacity retention rate (%) of the lithium-ion battery at 25°C = discharge capacity (mAh) after the 400^{th} cycle/discharge capacity (mAh) after the first cycle × 100%;
cycle capacity retention rate (%) of the lithium-ion battery at 45°C = discharge capacity (mAh) after the 200^{th} cycle/discharge capacity (mAh) after the first cycle × 100%;

### Cycle expansion rate test:

Using a spiral micrometer to test a thickness of a lithium-ion battery in a fully charged state at the first cycle of the lithium-ion battery in the following embodiments, and a thickness in the fully charged state at the 400^{th} cycle: cycle thickness expansion rate of (%) of the lithium-ion battery at the 400^{th} cycle = (thickness of the fully charged battery at the 400^{th} cycle/thickness of the battery fully charged for the first time - 1) × 100%;
using a measurement instrument to record a surface area that is of the negative active material layer and parallel to the surface of the negative current collector after the lithium-ion battery in the following embodiments are disassembled in the fully charged state at the first cycle, and to record a surface area that is of the negative active material layer and parallel to the surface of the negative current collector after the battery is disassembled in the fully charged state at the 400^{th} cycle: XY expansion rate (%) of the lithium-ion battery at the 400^{th} cycle = (surface area of the negative active material layer at the 400^{th} cycle/surface area of the negative active material layer at the first cycle - 1) × 100%.

### Discharge rate test:

Putting the lithium-ion battery in the following embodiments into a 25 °C±2 °C thermostat, leaving the battery to stand for 2 hours, and discharging the battery at a constant current of 0.2C until the voltage reaches 3.0 V; charging the battery at a constant current of 0.5C until the voltage reaches 4.4 V, and then charging the battery at a constant voltage of 4.4 V until the current reaches 0.05 C; leaving the batteries to stand for 5 minutes; and discharging the battery at a constant current of 0.2C until the voltage reaches 3.0 V; recording the discharge capacity of the lithium-ion battery discharged at a constant current of 0.2C;
charging the lithium-ion battery at a constant current of 0.5C until the voltage reaches 4.35 V, then charging the battery at a constant voltage of 4.35 V until the current reaches 0.05C fully charged, and then discharging the battery at a constant current of 2.0C until the voltage reaches 3.0 V; recording the discharge capacity of the lithium-ion battery discharged at a constant current of 2.0C;
taking 4 lithium-ion battery for testing in each group, and calculating an average value of the discharge rate of the lithium-ion battery: discharge rate = discharge capacity (mAh) of discharging at a constant current of 2.0C/discharge capacity (mAh) of discharging at a constant current of 0.2C/.

### II. Preparation methods

### Preparing a positive electrode

dissolving lithium cobalt oxide (LiCoO₂), conductive carbon black, and polyvinylidene fluoride (PVDF) in an N-methylpyrrolidone (NMP) solution at a weight ratio of 96:2:2 to form a positive electrode slurry; and using an aluminum foil as a positive current collector, coating the positive electrode slurry onto the positive current collector; and performing drying, cold calendering, and cutting steps to obtain a positive electrode.

### Preparing an electrolytic solution

in an environment with a water content of less than 10 ppm, mixing lithium hexafluorophosphate, fluoroethylene carbonate (FEC), and a nonaqueous organic solvent (at a weight ratio of ethylene carbonate (EC):dimethyl carbonate (DMC):diethyl carbonate (DEC) = 1:1:1) to prepare an electrolytic solution with an FEC weight percent of 10 wt% and a lithium hexafluorophosphate concentration of 1 mol/L.

### Preparing a lithium-ion battery

Using a polyethylene (PE) porous polymer film as a separator; sequentially stacking the positive electrode, the separator, and the negative electrode that is disclosed in the following embodiments and comparative embodiments, placing the separator between the positive electrode and the negative electrode to serve a function of separation, and then winding them into an electrode assembly; putting the electrode assembly into an aluminum laminated film packaging bag, and performing drying at 80 °C to obtain a dry electrode assembly; and injecting the electrolytic solution into the dry electrode assembly, and performing steps such as vacuum packaging, static standing, formation, and reshaping to complete preparing the lithium-ion batteries in the following embodiments and comparative embodiments.

### Embodiment 1

Adding a silicon oxide material SiOₓ (0.5 ≤ x ≤ 1.6) and artificial graphite into a mixer to mix them into a negative active material, where an 12/11 ratio value is 0.38 after the silicon oxide material undergoes an X-ray diffraction test; adding polyacrylic acid and conductive carbon black into the negative active material that is being stirred (a weight ratio of the negative active material to the conductive carbon black to the polyacrylic acid is 95:2:3); and keeping stirring for 60 minutes at a revolution speed of 20 circles/min and a rotation speed of 1,200 circles/min; then adding deionized water and stirring for 120 minutes to obtain a mixed slurry, where the weight ratio of the silicon oxide material SiOₓ is 1%;
using a copper foil as a negative current collector, where a thickness of the negative current collector is 9 µm and an absolute strength is 1800 N/m; coating the mixed slurry onto the negative current collector, and drying the negative current collector; cold-calendering the dried negative current collector to obtain a negative active material layer, where a thickness of the negative active material layer is 90 µm and a compacted density is 1.75 g/cm³, and then performing a cutting step to obtain a negative electrode.

### Embodiments 2~8

The preparation method is the same as that in Embodiment 1, but differences are: in Embodiments 2~8, the weight ratio of the silicon oxide material SiOₓ is 7%, 11%, 15%, 20%, 30%, 50%, and 70%, respectively.

### Embodiments 9~15

The preparation method is the same as that in Embodiment 3, but differences are: in Embodiments 9~15, the thickness of the negative current collector is 8 µm, 7 µm, 6 µm, 5 µm, 4 µm, 2.5 µm, and 1 µm, respectively, and the absolute strength of the negative current collector is 1,600 N/m, 1,400 N/m, 1,200 N/m, 1,000 N/m, 800 N/m, 500 N/m, and 200 N/m, respectively.

### Embodiments 16~19

The preparation method is the same as that in Embodiment 3, but differences are: in Embodiments 16~19, a nickel foil, a titanium foil, a chromium foil, and a stainless steel foil are used as the negative current collector, respectively.

### Embodiments 20~23

The preparation method is the same as that in Embodiment 3, but differences are: in Embodiments 20~23, the weight the 12/11 ratio values of the silicon oxide material after the X-ray diffraction test are 0.41, 0.64, 1, and, 2.5, respectively.

### Embodiments 24-27

The preparation method is the same as that in Embodiment 3, but differences are: in Embodiments 24~27, the silicon oxide material is doped with the metal elements lithium, magnesium, titanium, and aluminum, respectively; in Embodiments 24~27, the weight percent of the dopant metal elements in the negative electrode material is 1.17%, 2%, 2%, and 1.5%, respectively.

Weight per unit and a compacted density of the negative electrodes in the foregoing embodiments and comparative embodiments are tested. Subsequently, a cycle performance test, a cycle expansion rate test, and a discharge rate test are performed on the lithium-ion battery, and test results are recorded.

Statistic values of the negative electrodes and the lithium-ion batteries in Embodiments 1~27 and the test results of the cycle performance test, the cycle expansion rate test, and the discharge rate test are shown Table 1 below.

**Table 1**

| Embodiment/Comparative Embodiment | Weight percent of the silicon oxide material (%) | Absolute strength of the current collector | 400-cycle capacity retention rate at 25 °C | 200-cycle capacity retention rate at 45 °C | 400-cycle thickness expansion rate at 25 °C | 400-cycle XY expansion rate at 25 °C | Discharge rate |
|---|---|---|---|---|---|---|---|
| Embodiment 1 | 1% | 1800 | 92.5% | 89.5% | 6.2% | 0.16% | 89.10% |
| Embodiment 2 | 7% | 1800 | 91.2% | 88.3% | 6.9% | 0.19% | 88.40% |
| Embodiment 3 | 11% | 1800 | 90.1% | 87.2% | 7.4% | 0.22% | 87.10% |
| Embodiment 4 | 15% | 1800 | 87.6% | 84.4% | 8.2% | 0.25% | 86.70% |
| Embodiment 5 | 20% | 1800 | 85.9% | 82.6% | 9.5% | 0.32% | 84.40% |
| Embodiment 6 | 30% | 1800 | 84.6% | 79.4% | 10.1% | 0.44% | 80.10% |
| Embodiment 7 | 50% | 1800 | 72.3% | 70.1% | 14.5% | 0.65% | 75.30% |
| Embodiment 8 | 70% | 1800 | 61.4% | 59.6% | 16.9% | 0.77% | 64.80% |
| Embodiment 9 | 11% | 1600 | 88.3% | 85.5% | 7.9% | 0.27% | 86.60% |
| Embodiment 10 | 11% | 1400 | 87.4% | 84.6% | 8.1% | 0.29% | 85.90% |
| Embodiment 11 | 11% | 1200 | 86.7% | 83.5% | 8.4% | 0.31% | 84.80% |
| Embodiment 12 | 11% | 1000 | 85.8% | 82.4% | 8.7% | 0.34% | 83.50% |
| Embodiment 13 | 11% | 800 | 81.4% | 79.7% | 10.1% | 0.44% | 80.20% |
| Embodiment 14 | 11% | 500 | 73.5% | 70.6% | 13.6% | 0.62% | 76.40% |
| Embodiment 15 | 11% | 200 | 62.9% | 57.8% | 15.5% | 0.74% | 67.70% |
| Embodiment 16 | 11% | 1800 | 89.3% | 86.3% | 7.8% | 0.25% | 86.4% |
| Embodiment 17 | 11% | 1800 | 88.6% | 85.4% | 8.2% | 0.26% | 86.1% |
| Embodiment 18 | 11% | 1800 | 87.4% | 85.1% | 8.6% | 0.29% | 85.4% |
| Embodiment 19 | 11% | 1800 | 87.1% | 84.8% | 8.8% | 0.31% | 84.9% |
| Embodiment 20 | 11% | 1800 | 92.5% | 89.5% | 6.2% | 0.19% | 86.7% |
| Embodiment 21 | 11% | 1800 | 91.1% | 87.2% | 7.2% | 0.23% | 86.1% |
| Embodiment 22 | 11% | 1800 | 88.6% | 84.4% | 8.4% | 0.28% | 85.1% |
| Embodiment 23 | 11% | 1800 | 83.7% | 80.4% | 9.5% | 0.42% | 83.6% |
| Embodiment 24 | 11% | 1800 | 91.3% | 88.3% | 7.1% | 0.21% | 88.4% |
| Embodiment 25 | 11% | 1800 | 91.6% | 88.4% | 7.0% | 0.20% | 88.1% |
| Embodiment 26 | 11% | 1800 | 90.8% | 87.7% | 7.4% | 0.21% | 87.9% |
| Embodiment 27 | 11% | 1800 | 90.5% | 87.5% | 7.3% | 0.22% | 87.6% |

As shown in Table 1, in the lithium-ion battery according to Embodiments 1~5, 9~12, 16~27 of this application, the weight ratio R of the silicon-based material in the negative electrode of the battery to a total weight of the negative active material layer and the absolute strength σ of the negative current collector satisfy the following formula: K = σ/(1.4 × R + 0.1), where K is 4,000 N/m. In contrast with other embodiments, in the embodiments that satisfy the foregoing weight percent range of the silicon-based material and the foregoing absolute strength range of the negative current collector in this application, the 400-cycle capacity retention rate at 25 °C can be maintained above 80%, the 400-cycle thickness expansion rate at 25°C can be maintained below 9.5%, and the 400-cycle XY expansion rate at 25°C can be maintained below 0.34%, and the discharge rate can be maintained above 83.5%.

Specifically, as can be learned from comparison between Embodiments 1-5 and Embodiments 6~86, when the content of the silicon-based material in the negative active material layer is higher, the cycle expansion rate of the lithium-ion batteries also increases significantly. As can be learned from Embodiments 6~8, when the content of the silicon-based material in the negative active material layer exceeds the strength ranges of the negative active material layer and the negative current collector specified in the embodiments of this application, because the strength of the negative current collector is insufficient to restrain the expansion rate of the silicon-based material, the XY expansion rate of the negative active material layer increases significantly. This leads to expansion and deformation of the lithium-ion batteries, and affects the cycle performance and safety performance of the lithium-ion batteries.

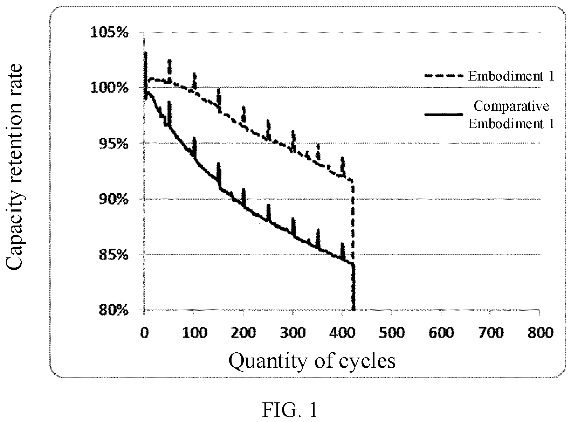

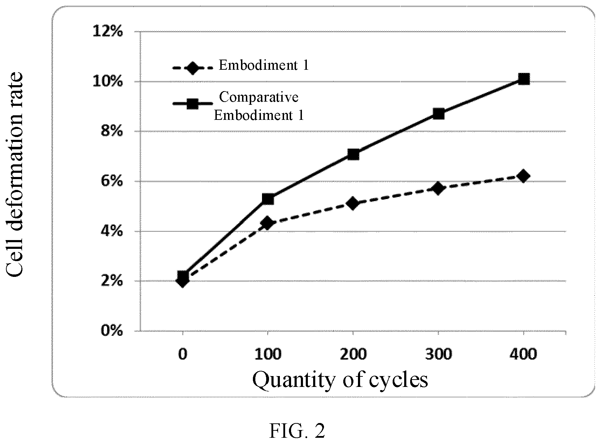

FIG. 1 shows a cycle capacity curve of a lithium-ion battery according to Embodiment 1 of this application, and FIG. 2 shows a cycle expansion rate curve of a lithium-ion battery according to Embodiment 6 of this application.

As shown in FIG. 1, after 400 cycles, due to a relatively low content of the silicon-based material in Embodiment 1, the stress generated by the negative active material layer during the cycle is relatively low. Therefore, XY expansion and deformation are not likely to occur as long as the negative current collector has a specific absolute strength, thereby ensuring bonding between the negative active material layer and the negative current collector, and ensuring relatively high cycle performance of the lithium-ion batteries. In contrast, in Embodiment 6, due to a relatively high content of the silicon-based material, the stress generated by the negative active material layer during the cycles exceeds the absolute strength of the negative current collector. This leads to deformation of the negative electrode, and causes the cycle retention rate of the lithium-ion batteries to deteriorate rapidly from the beginning of cycles. Therefore, the capacity retention rate of the lithium-ion battery according to Embodiment 4 drops rapidly.

As can be learned from comparison between Embodiments 9~12 and Embodiments 13~15, when the negative active material is the same, different absolute strengths of the negative current collector reflect the stress intensity that the negative current collector can withstand from the negative active material layer, and further reflect the extent of suppressing the XY expansion and deformation by the negative electrode. When the absolute strength of the negative current collector is lower, the XY expansion rate and the deformation rate of the negative electrode is higher, the cycle performance of the battery is lower, and the capacity retention rate is lower after completion of the same quantity of cycles. In addition, the deformation of the negative electrode also deteriorates the rate performance of the lithium-ion batteries.

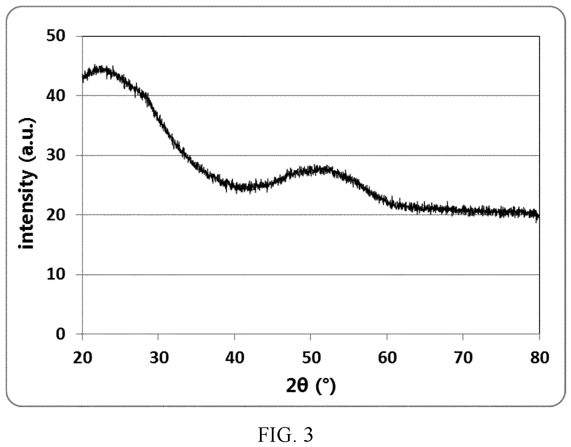

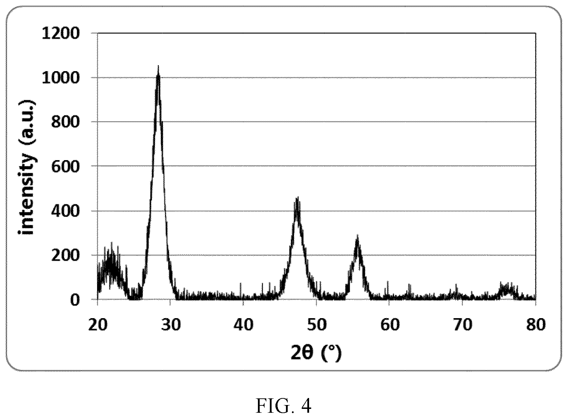

FIG. 3 and FIG 4 show X-ray diffraction patterns of a silicon-based material according to Embodiment 20 and Embodiment 23 of this application, respectively.

As can be learned from comparison among Embodiments 20 to 23, with the increase of the 12/11 ratio value, the cycle retention rate of the lithium-ion battery keeps decreasing, the cycle expansion rate increases, and the rate performance deteriorates. The 12/11 ratio value reflects the extent of impact caused by disproportionation onto the material in the silicon-based material. When the value is larger, the size of silicon crystal grains caused by disproportionation of the silicon oxide inside the material is larger. Consequently, the stress in a local region of the negative active material layer increases rapidly during lithiation, thereby disrupting a crystal structure of the silicon-based material during charge and discharge cycles.

Through comparison of the foregoing embodiments and comparative embodiments, it can be clearly understood that, by defining the relationship between the weight ratio of the silicon-based material in the negative electrode and the absolute strength of the negative current collector, this application can effectively reduce irregular expansion and deformation of the negative electrode in the lithium-ion battery, and can also mitigate the flake-off of the negative active material layer from the negative current collector to some extent, thereby enhancing the cycle performance and safety performance of the lithium-ion battery.

References to "embodiments", "some embodiments", "an embodiment", "another example", "example", "specific example" or "some examples" throughout the specification mean that at least one embodiment or example in this application includes specific features, structures, materials, or characteristics described in the embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment or example in this application. In addition, specific features, structures, materials, or characteristics herein may be combined in one or more embodiments or examples in any appropriate manner.

Although illustrative embodiments have been demonstrated and described above, a person skilled in the art understands that the above embodiments shall not be construed as a limitation on this application, and changes, replacements, and modifications may be made to the embodiments without departing from the spirit, principles, and scope of this application.

## Claims

1. A negative electrode, comprising:
a negative current collector; and
a negative active material layer, wherein the negative active material layer comprises a silicon-based material,
wherein a weight ratio R of the silicon-based material to a total weight of the negative active material layer and an absolute strength σ of the negative current collector satisfy the following formula: K = σ/(1.4 × R + 0.1), wherein K is a relation coefficient, and the relation coefficient is greater than or equal to 4,000 N/m.

2. The negative electrode according to claim 1, wherein the absolute strength of the negative current collector is greater than or equal to 500 N/m.

3. The negative electrode according to claim 1, wherein a thickness of the negative current collector is 1 µm to 15 µm.

4. The negative electrode according to claim 1, wherein the silicon-based material comprises one or more silicon oxide materials whose component is represented by a general formula M_{y}SiOₓ, wherein 0 ≤ y ≤4, 0 ≤ x ≤4, and M comprises at least one of Li, Mg, Ti, and Al.

5. The negative electrode according to claim 4, wherein, in a diffraction pattern of primary particles of the silicon oxide material in an X-ray diffraction test, a first peak intensity attributed to a range of 20.5°~21.5° is I1, a second peak intensity attributed to a range of 28.0°~29.0° is 12, and 0 < 12/11 ≤ 1.

6. The negative electrode according to claim 1, wherein the weight ratio of the silicon-based material to the total weight of the negative active material layer is 1% to 70%.

7. The negative electrode according to claim 1, wherein the negative active material layer further comprises a binder and a conductive agent; the binder comprises at least one of polyacrylic acid, sodium polyacrylic acid, potassium polyacrylic acid, lithium polyacrylic acid, polyimide, polyvinyl alcohol, carboxymethyl cellulose, sodium carboxymethyl cellulose, polyamide imide, styrene butadiene rubber, and polyvinylidene fluoride; and the conductive agent comprises at least one of conductive carbon black, carbon nanotubes, carbon fiber, and Ketjen black.

8. The negative electrode according to claim 1, wherein the negative current collector comprises at least one of a copper foil, a nickel foil, a titanium foil, a chromium foil, and a stainless steel foil.

9. The negative electrode according to claim 1, wherein the silicon-based material further comprises a coating, and the coating comprises at least one of a carbon material and a polymer material; the carbon material comprises at least one of amorphous carbon, carbon nanotubes, carbon nanoparticles, vapor grown carbon fiber, and graphene; and the polymer material comprises at least one of polyvinylidene fluoride or a derivative thereof, carboxymethyl cellulose or a derivative thereof, sodium carboxymethyl cellulose or a derivative thereof, polyvinylpyrrolidone or a derivative thereof, polyacrylic acid or a derivative thereof, and polystyrene butadiene rubber.

10. An electrochemical device, comprising:
a positive electrode;
a separator; and
the negative electrode according to any one of claims 1 to 9.

11. An electronic device, comprising the electrochemical device according to claim 10.
